# EUROPEAN PATENT APPLICATION

(11) **EP 1 596 452 A1**
(43) Date of publication of application: **16.11.2005**
(21) Application number: 03705097.8
(22) Date of filing: 13.02.2003
(51) Int. Cl.: H01M 8/02, H01M 8/10

(54) **METHOD FOR PRODUCING SEPARATOR OF FUEL CELL**

(71) Applicant: Tsushima, Eiki, Fuji-shi, Shizuoka 416-0955 (JP)
(72) Inventor: Tsushima, Eiki, Fuji-shi, Shizuoka 416-0955 (JP)
(74) Representative: Möbus, Steffen
(86) International application number: PCT/JP2003/001472
(87) International publication number: WO 2004/073097

(57) **Abstract**

The present invention provides a method of producing the separator for a fuel cell that is suitable for mass production and that by separating the compression-molding process of pressing a precursor powder comprising carbon powder and thermosetting resin with a press from the resin-setting process of setting the thermosetting resin by applying heat, is capable of increasing the production rate of the expensive press, while at the same time decreasing the production cost.

The fuel-cell separator is produced by a compression-molding process in which a mixture of carbon powder and thermosetting resin is used as the precursor powder, and in which a press is used to apply pressure to the precursor powder that has been placed in a die and mold it into a molded plate having a separator shape; and a resin-setting process in which the molded plate formed in the compression-molding process is heated in a heating apparatus such as an oven to set the thermosetting resin.

## Description

### BACKGROUND OF THE INVENTION

### Field of the Invention:

This invention relates to a method for producing the separator of a fuel cell that is used in a solid-polymer-type fuel cell, and more particularly to a method of producing the separator of a fuel cell that uses a mixture comprising a carbon powder and thermosetting resin as the precursor powder.

### Description of the Related Art:

A fuel cell is an apparatus that allows hydrogen and oxygen to react by way of an electrolyte to convert chemical energy directly to electric energy, and there are several types depending on the electrolyte used, however, since a solid-polymer-type fuel cell that uses a solid-polymer-electrolyte film as the electrolyte can operate at low temperature of about 80°C, it is attracting,attention as a generating apparatus for electric automobiles.

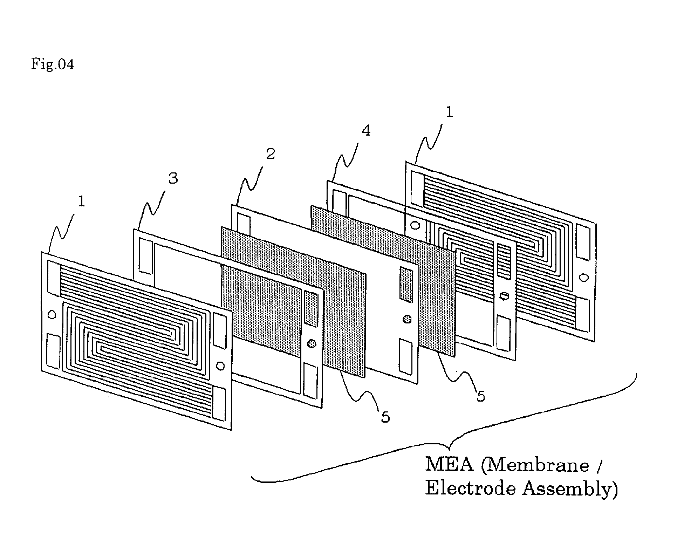

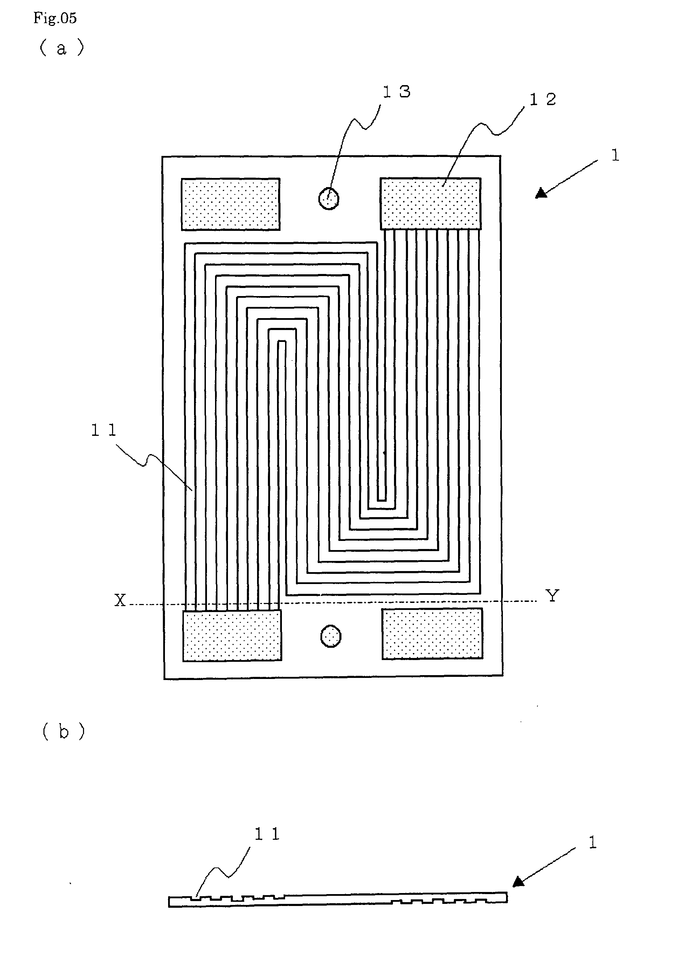

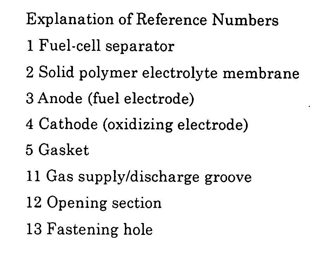

Fig. 4 is an exploded view showing the construction of a unit cell of a fuel cell, and Figs. 5A and 5B are drawings showing the construction of the separator of the fuel cell shown in Fig. 4, where Fig. 5A is a top view and Fig. 5B is a cross-sectional view of section X-Y shown in Fig. 5A.

As shown in Fig. 4, a solid-polymer-type fuel cell is constructed by arranging tens to hundreds of MEAs (membrane electrode assemblies) comprising two fuel-cell separators 1, which have a plurality of grooves on both the left and right surfaces, and that by way of a gasket 5 join together a solid-polymer-electrolyte film 2, anode (fuel electrode) 3 and cathode (oxidizing-agent electrode) 4 as a unit cell; where by supplying fluid fuel gas (hydrogen gas) to the anode and fluid oxidation gas (oxygen gas) to the cathode, electric current is taken from the external circuit.

### (Pg. 2)

As shown in Fig. 5A and 5B, the fuel-cell separator 1 is shaped such that it has a plurality of gas-supply/discharge grooves 11 on one side or both sides of a thin plate-shaped body, opening sections 12 through which fuel gas or oxidation gas is supplied to the gas-supply/discharge grooves 11, and fastening holes 13 for lining up the MEA in parallel; and together with hav i ng the function of separating the fuel gas and oxidation gas that flow through the fuel cell such that they do not mix with each other, it also has the important role of transmitting the electric energy generated by the MEA to the outside, and to radiate heat that is generated by the MEA to the outside.

Therefore, characteristics that are desired in a fuel-cell separator 1 are bolt tightening during assembly and sufficient strength against vibration of an automobile or the like, decreased electrical resistance in order to decrease power generation loss, and gas impermeability in order to completely separate the supply fuel gas and oxidation gas on both sides and supply the gases to the electrodes.

For this kind of fuel-cell separator 1, a carbon compound material that uses a thermosetting resin such as phenol resin, which is very advantageous from both a production and cost aspect, has been proposed (for example, Japanese Patent No. S59-26907), and as the production method, a method of mixing carbon powder and thermosetting resin and placing it in a die, then compressing it while at the same time heating it to harden the resin has been used.

However, in this prior art, when manufacturing a fuel-cell separator 1 using a precursor powder comprising carbon powder and thermosetting resin, the precursor powder is placed in a die, and using a press, pressure and temperature are applied, and even though phenol resin is a fast setting thermosetting resin, it requires several minutes to set at 160°C, and depending on the size of the precursor powder, several minutes are also required for the heat to be transferred to the precursor powder and for the temperature to rise: therefore, a problem exists in that the production speed of the expensive press equipment is slowed.

### (Pg. 3)

Taking the aforementioned problems into consideration, the object of the present invention is to provide a method for producing the separator for a fuel cell that is suitable for mass production and that makes it possible to increase the production rate of an expensive press, and reduce the production cost by separating the compression molding process, in which a press is used to compress a precursor powder that comprises carbon powder and thermosetting resin, from the resin-setting process of setting thermosetting resin by adding heat.

### SUMMARY OF THE INVENTION

In order to solve the aforementioned problems, the present invention is constructed as described below.

The invention according to a first claim of the invention is a method of producing the separator of a fuel cell that uses a carbon powder and thermosetting resin mixed at a specified ratio as the precursor powder, and comprising: a compression-molding process of placing the precursor powder in a die and performing cold-compression molding; and a resin-setting process of applying heat to the thermosetting resin at the resin-setting temperature or greater with no pressure being applied to the precursor powder that was molded in the compression-molding process.

The invention according to a second claim is the method of producing the separator of a fuel cell of claim 1 wherein in the compression-molding method a pressure of 100 MPa or more is applied to the precursor powder.

The invention according to a third claim is the method of producing the separator of a fuel cell of claim 1 or claim 2 wherein phenol resin is used as the thermosetting resin and the carbon powder is coated with that phenol resin.

The invention according to a fourth claim is a fuel-cell separator that is produced us i ng the method of producing the separator of a fuel cell of any one of the claims 1 to 3.

The invention according to a fifth claim is a fuel cell in which a plurality of unit cells, which comprise an anode and cathode that are joined by a pair of separators by way of a solid-polymer-electrolyte membrane, are arranged in parallel, and that uses the fuel-cell separator of claim 4 for all or part of the separator.

### BRIEF DESCRIPTION OF THE DRAWINGS

Fig. 1 is schematic drawing showing the construction of a press that is used in the compression molding process of the method for producing the separator of a fuel cell of this invention.
Fig. 2 is a schematic drawing showing the construction of the heating apparatus that is used in the resin-setting process of the method for producing the separator of a fuel cell of this invention.
Fig. 3 is a table showing the precursor powder, process and adequacy judgment results for embodiments and comparative examples of the method for producing the separator of a fuel cell of this invention.
Fig. 4 is an exploded view showing the construction of a unit cell of a fuel cell.
Figs. 5A and 5B are drawings showing the construction of the separator of the fuel cell shown in Fig. 4, where Fig. 5A is a top view and Fig. 5B is a cross-sectional view of section X-Y shown in Fig. 5A.

### DESCRIPTION OF THE PREFERRED EMBODIMENT OF THE INVENTION

The preferred embodiment of the invention will be explained in detail below based on the drawings.

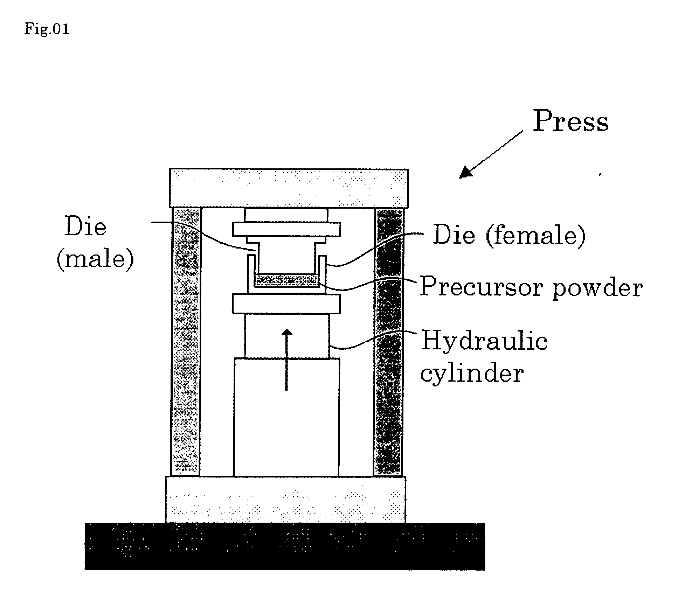

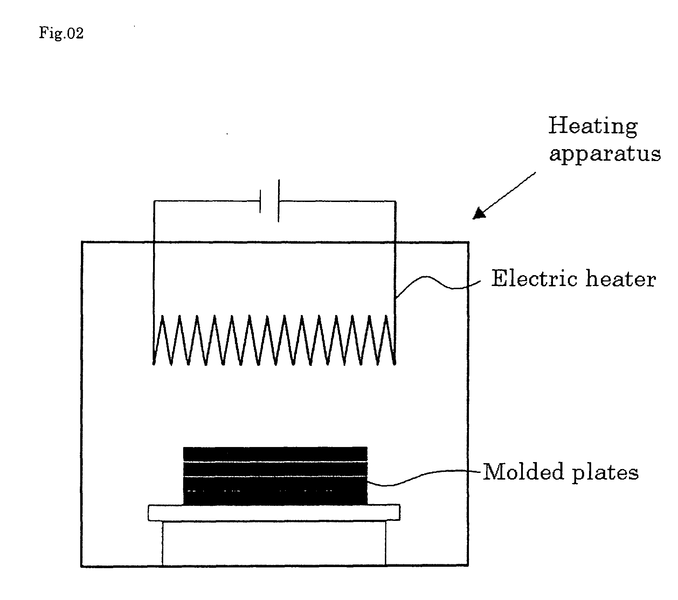

Fig. 1 is schematic drawing showing the construction of a press that is used in the compression molding process of the method for producing the separator of a fuel cell of this invention, and Fig. 2 is a schematic drawing showing the construction of the heating apparatus that is used in the resin-setting process of the method for producing the separator of a fuel cell of this invention.

This embodiment of the invention is a method for producing a fuel-cell separator 1 comprising: a compression-molding process that uses a mixture of carbon powder and thermosetting resin as the precursor powder, and that by using a press to apply pressure to the precursor powder that has been placed in a die, it compresses and molds it into a molded plate having the separator shape; and a resin-setting process that heats the molded plate formed in the compression-molding process in a heating apparatus such as an oven to set the thermosetting resin.

### (Pg. 5)

First, the carbon powder and thermosetting resin are prepared at a specified weight ratio, and sufficiently mixed to create the precursor powder. It is preferred that the precursor powder be mixed at a weight ratio of 90% to 60% carbon and 10% to 40% thermosetting resin. Also, in addition to the carbon powder and thermosetting resin, it is also possible to add as necessary a fiber base material, filler, mold lubricant, anti-hydration decomposer, or the like to the precursor powder.

It is possible to use graphite powder (carbon powder) or the like as the carbon powder, and when graphite powder is used, it is preferred that graphite power having an average grain size of 10 *µ*m to 100 *µ*m, and an aspect ratio of 2 or less be used.

When a phenol resin such as a resol-type phenol resin, or novolak-type phenol resin is used as the thermosetting resin, moldability is good, and furthermore, when carbon power having a phenol resin coating is used, the strength is increased, which is preferable.

In the compression-molding process, a press such as shown in Fig. 1 is used, and the precursor powder is placed evenly in the die (female die), and by pressing the die (female die) against another die (male die) with a hydraulic cylinder, the female die and male die apply a pressure of 100 MPa or more to the precursor powder to form a separator-shaped molded plate. At this time, by having specified groove shapes formed on the pressure surfaces of the female die and male die, gas-supply/discharge grooves 11 are reflected on and formed on the molded plate.

Also, the compression-molding process is cold-compression molding that is performed at room temperature and does not require heating, and since it is not necessary to heat the precursor powder, it is possible to reduce the molding time, making it possible to compress and mold one separator-shaped molded plate in a time of 5 to 10 seconds. Also, since the resin is not set, the die does not adhere to the product, so there is good mold release.

### (Pg. 6)

When performing cold-compression molding with a press, it is possible to obtain a high-density separator-shaped molded plate by applying a pressure of 100 MPa or more to the precursor powder, and thus it is possible to produce a fuel-cell separator 1 that has both good mass productivity and high performance.

In the resin-setting process, the molded plate that is taken out of the die is placed inside a heating apparatus as shown in Fig. 1, and using a method of heating such as an electric heater, heat is applied in a state of no applied pressure at a temperature of 170°C to 200°c, wh i ch is greater than the setting temperature of the thermosetting resin, to set the thermosetting resin and produce the fuel-cell separator 1. In this resin-setting process, it is possible to place a lot of molded plates in a batch-type oven at the same time and heat them, or in the case of a continuous oven, it is also possible to place the molded plates on a belt conveyor and heat them. In either case, heating takes time, however, in these methods it is possible to process a large quantity, and thus the total production time is reduced.

As was explained above, with this embodiment, by separating the compression-molding process of molding a precursor powder comprising carbon powder and thermosetting resin using a press from the resin-setting process of the thermosetting resin by applying heat, it is possible to reduce the amount of time required since it is not necessary to heat the precursor powder in the compression-molding process, and since it is possible to mold one separator-shaped molded plate in a time of 5 to 10 seconds, this embodiment is effective in making it possible to increase the production rate of expensive press equipment.

Furthermore, with this embodiment, by separating the compression-molding process of molding a precursor powder comprising carbon powder and thermosetting resin using a press from the resin-setting process of the thermosetting resin by applying heat, it is possible to slowly heat and set a plurality of molded plates that were molded in the compression-molding process at the same time in a continuous oven or the like, so this embodiment is effective in making it possible to greatly reduce the production time as well as cut the production cost, thus making it possible to overwhelmingly improve mass productivity.

### (Pg. 7)

The preferred embodiments of this invention and comparative examples are described below and used to explain the present invention in detail; however, the present invention is not limited to the embodiments described below.

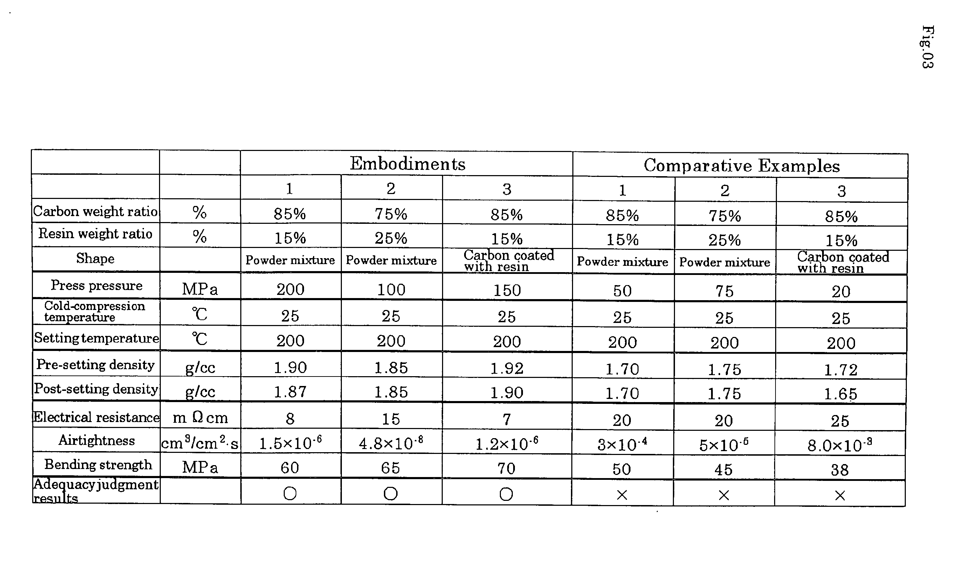

Fig. 3 is a table showing the precursor powder, process and adequacy judgment results for embodiments and comparative examples of the method for producing the separator for a fuel cell of this invention.

For each of the embodiments and comparative examples, the density, electrical resistance, airtightness and bending strength are measured and compared, and the methods used for measuring the density, electrical resistance, airtightness and bending strength are as described below.

Density: The bulk density was calculated from the value obtained by dividing the weight by the volume.

Electrical Resistance: The electrical resistance is measured by the 4-terminal method using a molded sample that is processed to a square shape having a length of 200 mm and 1 mm cross section.

Airtightness: The airtightness was measured according to Method AA of JIS K7126 (differential pressure method) under the following conditions:
Sample air conditioning: 23°C, 50% RH * 48 Hr or more,
Measurement temperature: 23°C,
Used gas: Hydrogen gas.

Bending strength: The bending strength was measured according to ASTM D-790 of a molded sample that was processed to a length of 60 mm, width of 20 mm and thickness of 3 mm using 3-point bending having a 50 mm span.

### (Embodiment 1)

Graphite powder having an average grain size of 20 *µ*m and grain aspect ratio of 1.5 was used as the carbon powder, and powdered phenol resin was used as the thermosetting resin, and they were sufficiently mixed at a weight ratio of 85% carbon powder and 15% resin to form the precursor powder. Then 600g of that mixed powder was placed evenly in a female die having dimensions 300 x 200 x 20 mm, and a molded sample was formed by applying a pressure of 200 MPa by a male die to solidify the powder. The pressurization rate was 5 mm/sec, and the temperature of the dies and precursor powder while pressure was being applied was kept at room temperature, which was 25°C. The pressed and solidified molded sample was removed from the die, and the dens i ty was measured and found to be 1. 90 g/cc.

### (Pg. 8)

Next, the molded sample that was removed from the die was placed in a heating apparatus and heated up to 200 °C to set the resin. The temperature rise at that time was from room temperature to 200 °C over 3 hours. After the molded sample was removed from the heating apparatus and observed, it was found that the density had decreased a little to 1. 87 g/cc, however no warping, deformation, bulging or the like was observed. Furthermore, the physical I properties were measured and found to be: electrical resistance = 8 m Ω cm, airtightness =1.5x10⁻⁶cm³/cm2·s, bending strength = 60 MPa, and the performance was also found to be suitable for a fuel-cell separator 1.

### (Embodiment 2)

The same carbon powder and thermosetting resin as used in embodiment 1 were used and mixed sufficiently at a weight ratio of 75% carbon powder and 25% resin to obtain the precursor powder. Then 600g of that mixed powder was placed evenly in a female die having dimensions 300 x 200 x 20 mm, and a molded sample was formed by applying a pressure of 100 MPa by a male die to solidify the powder. The pressurization rate was 5 mm/sec, and the temperature of the dies and precursor powder while pressure was being applied was kept at room temperature, which was 25 °C. The pressed and solidified molded sample was removed from the die, and the density was measured and found to be 1.85 g/cc.

Next, the molded sample that was removed from the die was placed in a heating apparatus and heated up to 200 °C to set the resin. The temperature rise at that time was from room temperature to 200 °C over 3 hours. After the molded sample was removed from the heating apparatus and observed, it was found that the density was still 1. 85 g/cc, and no warping, deformation, bulging or the like was observed. Furthermore, the physical properties were measured and found to be: electrical resistance = 15 m Ω cm, airtightness = 4.8 x 10⁻⁸ cm³/cm2 · s, bending strength = 65 MPa, and the performance was also found to be suitable as a fuel-cell separator 1.

### (Pg. 9)

### (Embodiment 3)

The carbon powder in embodiment 1 was coated with phenol resin (the weight ratio was 85% carbon, 15% resin) and used as the precursor powder. Then 600g of that mixed powder was placed evenly in a female die having dimensions 300 x 200 x 20 mm, and a molded sample was formed by applying a pressure of 150 MPa by a male die to solidify the powder. The pressurization rate was 5 mm/sec, and the temperature of the dies and precursor powder while pressure was being applied was kept at room temperature, which was 25 °C. The pressed and solidified molded sample was removed from the die, and the density was measured and found to be 1. 92 g/cc.

Next, the molded sample that was removed from the die was placed in a heating apparatus and heated up to 200 °C to set the resin. The temperature rise at that time was from room temperature to 200 °C over 3 hours. After the molded sample was removed from the heating apparatus and observed, it was found that the density decreased somewhat to 1.90 g/cc, however, no abnorma warping, deformation, bulging or the like was observed. Furthermore, the physical properties were measured and found to be: electrical resistance= 7 m Ω cm, airtightness = 1.2 × 10⁻⁶ cm³/cm²· s, bending strength = 70 MPa, and the performance was also found to be suitable as a fuel-cell separator 1.

### (Comparative Example 1)

Except that the compression force applied to the dies was 50 MPa, the molded sample was created using exactly the same precursor power and process as in embodiment 1. The pressed and solidified molded sample was removed from the die, and the density was measured and found to be 1.70 g/cc.

### (Pg. 10)

Next, the molded sample that was removed from the die was placed in a heating apparatus and heated up to 200 °C to set the resin. The temperature rise at that time was from room temperature to 200 °C over 3 hours. After the molded sample was removed from the heat i ng apparatus and observed, it was found that the density was still 1.70 g/cc and no abnormal warping, deformation, bulging or the like was observed. Furthermore, the physical properties were measured and found to be: electrical resistance = 20 mΩcm, airtightness = 3.0 x 10⁻⁴ cm³/cm2 · s, bending strength = 50 MPa. The airtightness became worse by two digits, and was not suitable for use as a fuel-cell separator 1.

### (Comparative Example 2)

Except that the compression force applied to the dies was 75 MPa, the molded sample was created using exactly the same precursor power and process as in embodiment 2. The pressed and solidified molded sample was removed from the die, and the density was measured and found to be 1.75 g/cc.

Next, the molded sample that was removed from the die was placed in a heating apparatus and heated up to 200 °C to set the resin. The temperature rise at that time was from room temperature to 200 °C over 3 hours. After the molded sample was removed from the heating apparatus and observed, it was found that the density was still 1.75 g/cc and no abnormal warping, deformation, bulging or the like was observed. Furthermore, the physical properties were measured and found to be: electrical resistance = 20 mΩcm, airtightness = 5. 0 x 10⁻⁵ cm³/cm² · s, bending strength = 45 MPa. The airtightness became worse and was not suitable for use as a fuel-cell separator 1.

### (Comparative Example 3)

Except that the compression force applied to the dies was 20 MPa, the molded sample was created using exactly the same precursor power and process as in embodiment 3. The pressed and solidified molded sample was removed from the die, and the density was measured and found to be 1.72 g/cc.

### (Pg. 11)

Next, the molded sample that was removed from the die was placed in a heating apparatus and heated up to 200 °C to set the resin. The temperature rise at that time was from room temperature to 200 °C over 3 hours. After the molded sample was removed from the heating apparatus and observed, it was found that the density decreased somewhat to 1.65 g/cc, however, no abnormal warping, deformation, bulging or the like was observed. Furthermore, the physical properties were measured and found to be: electrical resistance = 25 mΩcm, airtightness = 8.0 x 10⁻³ cm³/cm2 · s, bending strength = 38 MPa. The airtightness became worse and was not suitable for use as a fuel-cell separator 1.

As described above, in embodiments 1 to 3 where the pressure acting on the precursor powder in the compression-molding process was 100 MPa or greater, it was possible to obtain a fuel-cell separator 1 that has sufficient physical properties and for which the electrical resistance, airtightness, and bending strength performance are all satisfied, however, in comparative examples 1 to 3 where the pressure acting on the precursor powder in the compression-molding process was 20 MPa to 75 MPa, the airtightness particularly became worse, and it was not possible to obtain a fuel-cell separator 1 that has sufficient physical properties.

The present invention is not limited to the embodiments described above, and it is clear that each of the embodiments can be properly changed within the technical scope of the invention. Moreover, the number, location and shape of each of the aforementioned components are not limited by the embodiments described above, and it is possible to use any appropriate number, location or shape in order to embody the present invention. In the drawings, the same reference numbers are used for identical component elements.

### Industrial Applicability

By separating the compression-molding process using a press to compress a precursor powder comprising carbon powder from the resin-setting process of the thermosetting resin by applying heat, the method for producing the separator of a fuel cell of this invention is effective in making it possible to reduce the molding time since it is not necessary to heat the precursor powder during the compression-molding process, and since one separator-shaped molded plate can be molded in a time of 5 to 10 seconds, it is possible to increase the product i on rate using expensive press equipment.

### (Pg. 12)

Furthermore, by separating the compression-molding process using a press to compress a precursor powder comprising carbon powder from the resin-setting process of the thermosetting resin by applying heat, the method for producing the separator of a fuel cell of this invention is effective in making it possible to slowly heat and set a plurality of molded plates, which were molded in the compression-molding process, in a continuous oven or the like at the same time, so it is possible to greatly reduce the production time and cut the production costs, and thus it is possible to overwhelmingly improve mass productivity.

## Claims

1. A method of producing the separator of a fuel cell that uses a carbon powder and thermosetting resin mixed at a specified ratio as the precursor powder, and comprising: a compression-molding process of placing said precursor powder in a die and performing cold-compression molding; and a resin-setting process of applying heat to said thermosetting resin at the resin-setting temperature or greater with no pressure being applied to said precursor powder that was molded in the compression-molding process.

2. The method of producing the separator of a fuel cell of claim 1 wherein in said compression-molding process a pressure of 100 MPa or more is applied to said precursor powder.

3. The method of producing the separator of a fuel cell of claim 1 or claim 2 wherein phenol resin is used as said thermosetting resin and said carbon powder is coated with that phenol resin.

4. A fuel-cell separator that is produced using the method of producing the separator of a fuel cell of any one of the claims 1 to 3.

5. A fuel cell in which a plurality of unit cells, which comprise an anode and cathode that are joined by a pair of separators by way of a solid-polymer-electrolyte membrane, are arranged in parallel, and that uses said fuel-cell separator of claim 4 for all or part of said separator.

## Amended claims

### Amended claims under Art. 19.1 PCT

**1.** (Revised) A method for producing the separator of a fuel cell that uses carbon powder and thermosetting resin mixed at a specified ratio as the precursor powder, and comprising:
a compression-molding process of performing cold-compression molding of said precursor powder that has been placed into a die into a separator-shaped molded plate; and
a resin-setting process of heating said molded plate that was molded in said compression-molding process to the resin-setting temperature or greater of said thermosetting resin with no applied pressure.

**2.** (Revised) The method for producing the separator of a fuel cell of claim 1 wherein in said compression-molding process, a pressure of 100 MPa or greater is applied to said molded plate.

**3.** The method of producing the separator of a fuel cell of claim 1 or claim 2 wherein phenol resin is used as said thermosetting resin and said carbon powder is coated with that phenol resin.

**4.** A fuel-cell separator that is produced using the method of producing the separator of a fuel cell of any one of the claims 1 to 3.

**5.** A fuel cell in which a plurality of unit cells, which comprise an anode and cathode that are joined by a pair of separators by way of a solid-polymer-electrolyte membrane, are arranged in parallel, and that uses said fuel-cell separator of claim 4 for all or part of said separator.
